# EUROPÄISCHE PATENTSCHRIFT

(11) **EP 3 091 266 B1**
(45) Veröffentlichungstag und Bekanntmachung des Hinweises auf die Patenterteilung: **03.07.2019**
(21) Anmeldenummer: 15166880.3
(22) Anmeldetag: 08.05.2015
(51) Int. Cl.: F16L 33/025, F16L 33/207, B25B 27/14

(54) **PRESSFITTING MIT PRESSLASCHE**
PRESS FITTING WITH PRESS TAB
RACCORD DE SERTISSAGE AVEC LANGUETTE DE PRESSION

(43) Veröffentlichungstag der Anmeldung: 09.11.2016
(73) Patentinhaber: Geberit International AG, 8645 Jona (CH)
(72) Erfinder: Heusser, Urs, 8722 Kaltbrunn (CH); Bachmann, Bastian Marc, 8852 Altendorf (CH)
(74) Vertreter: König Szynka Tilmann von Renesse Patentanwälte Partnerschaft mbB

(56) Entgegenhaltungen:
- EP-A1- 2 607 764
- EP-A1- 2 607 768
- DE-U1-202009 000 508
- US-A1- 2005 264 002
- US-A1- 2007 134 980

## Beschreibung

Die vorliegende Erfindung bezieht sich auf einen Pressfitting mit Presslasche.

Fittinge dienen zum Befestigen einer Schlauch- und hier vorzugsweise Rohrleitung an einem anderen Teil, etwa einer Armatur, oder zum Koppeln von Leitungen aneinander. Man unterscheidet unterschiedliche Typen, und zwar nach der Art der abdichtenden Befestigung der Leitung an dem Fitting. Neben selbst-arretierenden Schiebefittingen, bei denen die Leitung eingesteckt wird und sich bei Zugbelastung in umgekehrter Richtung selbst befestigt, und Schiebefittingen, bei denen ein Fittingteil zur Befestigung in axialer Richtung (bezogen auf die Leitung) verschoben wird, sind auch Pressfittinge bekannt. Bei diesen wird ein Fittingteil mit einem speziellen Werkzeug plastisch verformt; im Regelfall handelt es sich um ein Metallblechteil. Bei vielen Pressfittingen dient dabei eine hohlzylindrische Metallblech-Presshülse zum Verpressen und wird entlang ihres im Wesentlichen gesamten Umfangs und damit auch entlang des gesamten Umfangs der Leitung von einer Presszange gegriffen und verformt.

Im Unterschied dazu gibt es speziellere Pressfittingtypen mit von einem im Wesentlichen hohlzylindrischen beziehungsweise ringförmigen Teil radial (wieder in Bezug auf die Zylindergeometrie und damit die Leitung) abstehender Presslasche. Beim Verpressen greift das Werkzeug nur die Presslasche, wobei diese senkrecht zur axialen und zur radialen Richtung in solcher Weise zusammengepresst wird, dass der ringförmige Teil gespannt und auf die Leitung aufgedrückt wird. In der Literatur wird hier in Anlehnung an einen einschlägigen Schweizer Hersteller öfters auch von Oetiker-Typ gesprochen, gelegentlich findet sich für die Presslasche auch der Ausdruck "Pressohr".

Bei der Presslasche handelt es sich in der Regel um einen einstückig mit dem ringförmigen Teil ausgebildeten Blechstreifenabschnitt, der radial gegenüber der Ringform nach außen vorsteht und dabei oft ein im wesentlichen flaches Plateau bildet, das nach außen weist. Ein aus der Presslasche und dem ringförmigen beziehungsweise Zylinderteil bestehende Metallblechabschnitt des Pressfittings wird oft auch als Spannzange bezeichnet. Das Presswerkzeug greift zwischen das Plateau und den ringförmigen Teil und erzeugt oder verstärkt beim Verpressen Hinterschnitte.

Beispielhaft kann verwiesen werden auf die EP 2 341 273 A1, die EP 2 497 989 A1, die EP 2 607 764 A1 und schließlich die EP 2 607 768 A1.

Die zugehörigen Presswerkzeuge werden gelegentlich auch als Presszangen bezeichnet und bilden häufig Aufsätze für motorische (insbesondere pneumatische) Antriebe. Beispielsweise bietet die bereits erwähnte Schweizer Herstellerin Oetiker solche Presswerkzeuge mit Motorantrieb an. Dem Begriff "Zange" entsprechend weisen die Presswerkzeuge zwei Werkzeughälften auf, die aufeinander zu und voneinander weg bewegbar sind, was einer Schließ- und einer Öffnungsbewegung entspricht. Die Werkzeughälften weisen dabei regelmäßig mehr oder weniger keilförmige Spitzen auf, die in den bereits erwähnten Bereich zwischen dem Plateau der Spannzange und der Presslasche eingreifen.

Ferner sind von einem Pressfitting abtrennbare Fittingteile als "Indikatoren" für die Verpressung bekannt. Dabei handelt es sich um zumindest auch an der Presslasche angeordnete Kunststoffelemente, die durch das Presswerkzeug beim Verpressen der Presslasche zerbrochen, zerquetscht oder zerrissen werden, z. B. Folienstücke. Die Indikatorfunktion ergibt sich daraus, dass das Vorhandensein eines intakten solchen Indikators bzw. Fittingteils eine Verpressung ausschließt, und im Umkehrschluss der Monteur oder eine Kontrollperson am Fehlen oder einer typischen Beschädigung des Indikators erkennt, dass (jedenfalls bei dem betreffenden Pressfitting) bereits verpresst wurde. Diese Kontrolle wird in der Praxis als wichtig angesehen, um versehentlich unverpresst bleibende und möglicherweise später nicht mehr zugängliche Pressfittinge ausschließen zu können.

Die US 2007/0134980 A1 beschreibt einen Pressfitting nach dem Oberbegriff des Anspruchs 1, bei dem ein Polymerbändchen durch das Presswerkzeug beim Verpressen zerrissen und dadurch abgenommen wird.

Gemäß der EP 2 607 768 A1 wird hingegen ein sogenanntes Kontrollelement an einem Pressfitting beim Verpressen verschoben und erlaubt damit eine visuelle Kontrolle.

Die US 2005/0264002 A1 zeigt zwei Pressfittinge mit Presslaschen, die an einer der Presslasche entgegengesetzten Seite von einem gemeinsamen Halter gegriffen werden, der beim Pressvorgang wegfällt.

Auf der Grundlage des beschriebenen Standes der Technik liegt der Erfindung die Aufgabe zugrunde, einen hinsichtlich des Indikators verbesserten Pressfitting mit nach außen abstehender Presslasche anzugeben.

Dazu bezieht sich die Erfindung auf einen Pressfitting mit den Merkmalen von Anspruch 1.

Bevorzugte Ausgestaltungen der Erfindung sind in den abhängigen Ansprüchen angegeben.

Die Erfindung möchte eine zuverlässige Halterung des Indikators an dem Pressfitting mit der Vermeidung eines Abreißens, Abquetschens oder Abbrechens verbinden. Deswegen schlägt sie einen elastisch zu lösenden Formschluss zwischen dem Indikator und einem anderen Pressfittingteil vor. Damit lassen sich verschiedene Vorteile erzielen, die je nach Einzelfall unterschiedlich wichtig sein können.

Erstens lassen sich die für die Zerstörung von insbesondere Kunststoffteilen (durch Quetschen, Brechen, Reißen) typischen Geräusche vermeiden, die beim Benutzer im Vergleich zu einem elastischen Abclipsen oder Wegschnappen einen viel weniger kontrollierten Eindruck und einen Restverdacht auf Fehlfunktion auslösen. Ferner zeigt der Indikator nach der Verpressung, ob nun noch an dem Pressfitting befindlich oder nicht, kein zerstörtes Erscheinungsbild, sondern macht den Eindruck eines kontrollierten und "sauberen" technischen Vorgangs. Die Erfindung kommt damit dem Benutzungskomfort und durch Verringerung des Verdachts auf Fehlfunktion auch der Zuverlässigkeit entgegen. Weil die Benutzungspersonen bei einem kontrolliert und sauber ablaufenden Vorgang auch weniger dazu neigen, den verpressten Fitting doch noch einmal zu prüfen, kann auch die Effizienz erhöht werden.

Zweitens ermöglicht die Erfindung im Bedarfsfall eine Wiederverwertbarkeit der abgenommenen Indikatoren, jedenfalls wenn sie grundsätzlich wieder in ihrer Montageposition an oder auf dem Pressfitting montiert werden können, was für die Erfindung nicht zwingend ist, aber als vorteilhaft angesehen werden kann.

Drittens können durch elastisches Lösen eines Formschlusses abgenommene Indikatoren mindestens weitgehend ihre unversehrte ursprüngliche Form beibehalten und haben damit eine kontrollierte und vorhersehbare Form. Sie eignen sich somit grundsätzlich eher zum Fangen oder Aufsammeln, etwa durch einen entsprechenden Mechanismus in einem Presswerkzeug oder auch durch eine aufsammelnde Person. Das Fangen etwa durch das Presswerkzeug muss dabei nicht unbedingt dem Aufsammeln und Recyceln oder Wiederverwerten dienen. Es kann auch einfach den Zweck verfolgen, den Indikator jedenfalls aus der unmittelbaren Umgebung des verpressten Fittings zu entfernen, wo er möglicherweise stören könnte.

Erfindungsgemäß ist der Indikator gegenüber dem übrigen Pressfitting körperlich getrennt. Mit "körperlich getrennt" ist gemeint, dass der Indikator gegenüber dem übrigen Pressfitting, insbesondere der Spannzange, ein separates Bauteil ist, also bspw. gegenüber der Spannzange zweistückig (und nicht einstückig) ausgebildet ist.

Die Montageposition ist natürlich diejenige Position des Indikators an dem Pressfitting, in der dieser durch den Formschluss gehalten ist. Erfindungsgemäß befindet sich der Indikator in dieser Montageposition an der Presslasche der Spannzange, also in direkter räumlicher Nähe dazu. In Betracht kommt vor allem, dass der Indikator dabei auf zumindest einer Seite der Presslasche in Umfangsrichtung (bezogen auf den zylindrischen Teil der Spannzange) und/oder in axialer Richtung an die Presslasche anschließt. Notwendig ist das aber nicht, solange sich der elastische Formschluss durch das entsprechende Presswerkzeug beim Verpressen auch anderweitig lösen lässt. Z. B. könnte der Indikator in axialer Richtung etwas beabstandet montiert sein, etwa an dem im Folgenden noch diskutierten Hülsenteil, und trotzdem von einem Presswerkzeug mit erfasst werden.

Die erwähnte Spannzange ist üblicherweise und vorzugsweise aus Metallblech und kann grundsätzlich zusammen mit dem davon körperlich getrennten Indikator die für die Erfindung wesentlichen Grundbestandteile bilden. Vorzugsweise ist aber zusätzlich ein an sich aus dem Stand der Technik vorbekanntes Hülsenteil vorgesehen, insbesondere aus Kunststoff. Dieses dient zum Halten der Spannzange einerseits und zum Halten der Schlauch- oder Rohrleitung andererseits und sorgt insbesondere im noch unverpressten Zustand für einen richtigen Sitz der Spannzange auf der Leitung. Das Hülsenteil weist vorzugsweise Abschnitte auf, die zwischen der Spannzange und der Leitung durch die Verpressung eingeklemmt werden und gewissermaßen die Verpressung radial nach innen vermitteln. Diese Aufgaben der Kräfteverteilung sind in vorliegendem Zusammenhang nicht von primärem Interesse.

Das Hülsenteil kann aber auch über die axiale Erstreckung der Spannzange hinausgehen und weist dabei vorzugsweise einen nach außen abstehenden Steg auf, und zwar axial an die Presslasche anschließend. Vorzugsweise sind zwei solche Stege auf den beiden in Betracht kommenden Seiten der Presslasche vorgesesehen. Dieser Steg kann zur Halterung der Spannzange auf dem Hülsenteil und damit auf der Leitung dienen, zur eindeutigen Positionierung der Presslasche in Umfangsrichtung dienen, den Indikator zur Leitung hin abstützen, die Halterung des Indikators durch Formschluss auf dem Pressfitting ermöglichen oder unterstützen und/oder ein Presswerkzeug im Sinn einer richtigen Positionierung für die Verpressung führen. Auf die beiden zuletzt genannten Funktionen wird im Folgenden näher eingegangen, wobei all diese Funktionen natürlich optional sind und nicht gleichzeitig vorliegen müssen.

Zu den beiden genannten Zwecken kann der Steg in axialer Blickrichtung betrachtet ein T-Profil aufweisen, also radial weiter außen deutlich breiter als radial weiter innen ausgebildet sein und dabei beidseits je einen Hinterschnitt aufweisen. Dieser Hinterschnitt kann zum Führen des Presswerkzeugs dienen, insbesondere wenn dieses ein entsprechend angepasstes Formteil aufweist. Der Hinterschnitt könnte zusätzlich oder stattdessen zur Herstellung des Formschlusses zur Indikatorhalterung dienen. Das (radial äußere) Querteil des T-Profils kann dabei in ähnlicher Weise wie zuvor für den Indikator beschrieben schräge Flächen aufweisen, und zwar einerseits zum Führen des Presswerkzeugs und/oder andererseits für den Formschluss mit dem Indikator. Insbesondere können pro Hinterschnitt zwei schräge Flächen vorgesehen sein, wobei z. B. eine in Umfangsrichtung äußere davon dem Formschluss mit dem Indikator dient und eine weiter innen liegende der Führung des Presswerkzeugs.

Der Querteil des T-Profils kann ferner durch den Indikator gewissermaßen verbreitert werden, also in Umfangsrichtung fortgeführt werden, was hinsichtlich der axialen Richtung einen Teil des oder vorzugsweise auch den ganzen Querteil betreffen kann. Damit lassen sich die zum elastischen Lösen des Formschlusses des Indikators verfügbaren Angriffsflächen an dem Indikator (zur Wechselwirkung mit dem Presswerkzeug) vergrößern.

Schließlich kann die Form des beschriebenen Stegs auch in einer weiteren Weise zur Führung dienen, nämlich indem der Steg, insbesondere ggf. der Querteil, an der axial von der Presslasche wegweisenden Seite schräg zurückspringt (in radialer Blickrichtung betrachtet), und zwar jeweils nach außen schräg zurück. Auch diese schrägen Flanken dienen der Führung des Presswerkzeugs.

Weiter oben wurde von zwei in Umfangsrichtung äußeren schrägen Flächen an dem T-Profil-Querteil zur Herstellung des Formschlusses mit dem Indikator geschrieben. Zusätzlich oder auch statt solcher Schrägflächen kann es an entsprechenden (nach innen weisenden) Flächen des Indikators und/oder den (nicht zwingend schrägen) nach außen weisenden Flächen an den Enden des T-Profil-Querteils Vorsprünge in der Art von Rastnasen geben, die in entsprechende Ausnehmungen auf der jeweils anderen Seite eingreifen. Solche Vorsprung-Ausnehmung-Kombinationen können natürlich auch völlig unabhängig von dem T-Profil an dem Pressfitting und insbesondere an dem oder den Stegen vorgesehen sein, um den Indikator durch elastisch lösbaren Formschluss zu halten. Beim Ausführungsbeispiel gibt es an beiden Seiten jedes Querteils der beiden Stege je eine Ausnehmung und an den entsprechenden Innenflächen des Indikators einen passenden Vorsprung.

Zur Veranschaulichung der vorstehenden geometrischen Erläuterung wird auf das Ausführungsbeispiel verwiesen.

Wie eingangs bereits ausgeführt, weisen einschlägige Presslaschen (etwa der Oetiker-Typ) ein nach außen weisendes Plateau auf, das die Presslasche in der Regel nach außen abschließt und das in der Regel senkrecht zu einer radialen Richtung (bezogen auf den zylindrischen Teil der Spannzange) verläuft. Ferner kann ein solches Plateau von außen betrachtet mit Blickrichtung radial nach innen einen Hinterschnitt ausbilden, also eine sich an das Plateau anschließende Form oder Wand des Pressfittings und konkret der Spannzange, die etwas nach innen (in Umfangsrichtung bezogen auf den zylindrischen Teil der Spannzange) zurückspringt und so für einen Eingriff des Indikators zur Herstellung des beschriebenen Formschlusses genutzt werden kann. Diese Möglichkeit ist beim Ausführungsbeispiel nicht gegeben, stellt aber eine denkbare Variante der Erfindung dar, und zwar alternativ oder zusätzlich zu der beschriebenen Halterung des Indikators an dem oder den Stegen. Vorzugsweise wären dieser Eingriff und der zugehörige Hinterschnitt vorhanden an zwei entgegengesetzten Seiten der Presslasche, also z. B. spiegelbildlich, und ferner vorzugsweise an einer oder den in Umfangsrichtung weisenden Seiten der Presslasche, die etwa beim Oetiker-Typ zur Verpressung herangezogen werden. Durch elastische Auslenkung der Indikatorteile, die diesen Eingriff herstellen, kann dann der Indikator von der Presslasche nach oben gelöst werden. Dazu eignen sich zur Ablöserichtung schräge Presslaschenseiten besonders.

Eine bevorzugte Ausgestaltung sieht vor, dass der Indikator zumindest mit Teilen (oder auch ganz) gegenüber dem zylindrischen Spannzangenteil nach außen absteht und dabei an einer seiner Außenseiten einen Hinterschnitt bildet. Hier sind die Außenseiten gemeint, die in Richtungen senkrecht zur radialen Richtung weisen, also in Umfangsrichtung und/oder in axialer Richtung. Dabei sind zwei Hinterschnitte an entgegengesetzten Außenseiten bevorzugt und geht es um den Eingriff in den zumindest einen Hinterschnitt, allerdings durch ein Presswerkzeugteil. Dieses Presswerkzeugteil kann dann z. B. durch eine eigene Keilform und/oder durch eine (ebenfalls bevorzugte) schräg (zur Ablöserichtung) stehende Innenseite des Indikators im Bereich des Hinterschnitts beim Verpressen den Indikator radial nach außen drücken. Dadurch kann der Indikator in der beschriebenen Weise abgetrennt werden, bspw. indem ein sich an einem weiter unten beschriebenen Teil des Pressfittings haltender Indikatorteil elastisch verformt wird. Hierbei sind hinsichtlich der Wechselwirkung zwischen dem Presswerkzeugteil und dem durch den Indikator gebildeten Hinterschnitt die in Umfangsrichtung weisenden Seiten bevorzugt.

Der obige Bezug zu der bezogen auf die Ablöserichtung schrägen Orientierung bezieht sich insbesondere auf eine Ablöserichtung mittig durch die Presslasche radial nach außen, was an den Rändern der Presslasche nicht mehr genau der radialen Richtung entspricht. Durch die schräge Orientierung zu dieser Ablöserichtung kann durch ein elastisches nach außen Drücken eines Indikatorteils der Formschluss überwunden werden bzw. durch ein Eingreifen eines Presswerkzeugteils und Bewegung desselben ungefähr senkrecht zur Ablöserichtung nach innen (zur Mitte der Presslasche) eine Kraft in Ablöserichtung erzeugt werden, also durch Keilwirkung.

Obwohl hinsichtlich der beschriebenen Wechselwirkungen zwischen dem Indikator und dem Pressfitting einerseits sowie zwischen dem Indikator und dem Presswerkzeug andererseits vorzugsweise zwei entgegengesetzte Seiten der Presslasche in Betracht kommen, läuft der Indikator vorzugsweise um die Presslasche vollständig und geschlossen um, umgibt die Presslasche also an allen Seiten, die ganz ungefähr senkrecht zur Ablöserichtung von der Presslasche wegweisen. Damit können eine gute Stabilität und ein guter zuverlässiger Sitz auf der Presslasche erreicht werden.

In Kombination damit, aber auch unabhängig davon, ist eine Öffnung in dem Indikator bevorzugt, durch die hindurch die Presslasche sichtbar ist und insbesondere ggf. das Plateau. Diese Öffnung befindet sich also radial außerhalb der Presslasche und erfasst dabei vorzugsweise den gesamten Bereich radial außerhalb der Presslasche. Durch diese Öffnung hindurch sind der Typ und der Aufbau der Spannzange gut erkennbar und die Öffnung spart Material in einem gemäß den vorstehenden Ausführungsformen für die Funktion nicht wesentlichen Bereich. Deswegen kann die Öffnung auch relativ groß gewählt werden und, wie erwähnt, den gesamten Bereich außerhalb der Presslasche erfassen. Insoweit begrenzt sich der Indikator auf Bereiche neben (statt über) der Presslasche, wobei er vorzugsweise, aber nicht zwingend, vollständig umlaufend ausgebildet ist.

Vorzugsweise hat der Indikator eine zumindest insoweit auffallende Farbe, als sie von den übrigen Farben des Pressfittings und insbesondere der Farbe der Spannzange und des Hülsenteils, abweicht.

Die Erfindung betrifft auch die Verwendung des beschriebenen Pressfittings zur Verpressung mit einem Presswerkzeug. Hierbei wird in Verbindung mit der Verpressung der beschriebene Formschluss elastisch gelöst, also insbesondere durch elastisches Nachgeben eines Teils des Indikators. Dazu kann eine keilförmige Spitze an zumindest einer Presswerkzeughälfte dienen, insbesondere einer auch sonst zur Verpressung der Presslasche dienenden Spitze. Üblicherweise und vorzugsweise sind zwei solche gegenläufig arbeitende Spitzen vorgesehen.

Ferner hat der Pressfitting in Bezug auf das Presswerkzeug vorzugsweise eine Führungsfunktion, und zwar insbesondere durch den Hinterschnitt des beschriebenen Steges mit T-Profil und/oder durch die schräg zurückspringenden Seiten des Steges.

Diese Führung soll zur Positionierung vor dem eigentlichen Verpressvorgang dienen, was durch Entlangbewegungen entlang schrägen Flächen oder Kanten und/oder Herstellung eines Formschlusses geschehen kann. Der Hinterschnitt des T-Profils eignet sich für einen Formschluss, indem sich eine entsprechende Form der jeweiligen Werkzeughälfte in den Hinterschnitt hineinschiebt. Insbesondere kann dies eine das Presswerkzeug in Richtung zu dem Pressfitting in gewissem Maß abschließende Wand sein. Durch eine schräge Innenseite des Steges an dem Hinterschnitt kann diese Wand in die richtige Position geführt werden.

Ähnliches gilt für die axial nach außen weisenden und schräg zurückspringenden Seiten des Steges. Diese können in Wechselwirkung kommen z. B. mit einer anderen Wand des Presswerkzeugs, die sich entlang der Schräge in die richtige Position bewegt. Ein Formschluss kann insbesondere dadurch entstehen, dass der Steg beidseits und vorzugsweise spiegelsymmetrisch vorgesehen ist und entsprechende Wände ebenfalls vorzugsweise beidseits und spiegelsymmetrisch, sodass diese beiden Wände des Presswerkzeugs den Steg zwischen sich greifen können (in Bezug auf die axiale Richtung). Auch in der Umfangsrichtung kann der Steg gegriffen werden, wenn der erwähnte Eingriff in den Hinterschnitt hergestellt wurde, nämlich von zwei entgegengesetzten Seiten. Die entsprechenden Wände des Presswerkzeugs können aneinandergrenzen, also gewissermaßen eine hohle Ecke bilden.

Besonders bevorzugt ist dabei, wenn die Führungsfunktion einem eigenen Führungsteil jeder Presswerkzeughälfte überlassen ist, welches sich in einer Schlussphase der Schließbewegung nicht mehr weiter bewegt und die Verpressung einem gegenüber dem Führungsteil dann separat bewegbaren Pressteil überlässt. Dadurch kann das Führungsteil (oder können eine Mehrzahl Führungsteile) vor der eigentlichen Verpressung einen Formschluss mit geringerem Spiel herstellen als wenn noch auf den für die eigentliche Verpressung nötigen Bewegungsweg Rücksicht genommen werden muss.

Schließlich kann in der kombinierten Verwendung des Pressfittings mit dem Presswerkzeug der abgetrennte (abgeclipste) Indikator in dem Presswerkzeug zwischen den Werkzeughälften aufgenommen und für einen Teil der Öffnungsbewegung der Werkzeughälften gehalten werden, um dann erst ausgeworfen zu werden.

Im Folgenden wird die Erfindung anhand eines Ausführungsbeispiels näher erläutert.
- Figur 1: zeigt eine perspektivische Ansicht eines erfindungsgemäßen Pressfittings;
- Figuren 2a, b: zeigen zwei Schnittdarstellungen durch den Pressfitting aus Figur 1 quer zur Leitungsrichtung und in zwei verschiedenen Positionen entlang dieser Leitungsrichtung;
- Figuren 3a, b: zeigen den Pressfitting aus den Figuren 1 und 2 in Einzelteilen und in zwei verschiedenen perspektivischen Ansichten;
- Figuren 4a-c, 5a-c und 6a-c: zeigen ein passendes Presswerkzeug für den Pressfitting aus den Figuren 1-3, wobei die verschiedenen Figurennummern unterschiedliche Öffnungs- bzw. Schließpositionen darstellen und jeweils die Einzeldarstellung a eine perspektivische Ansicht und die Einzeldarstellungen b und c Schnittansichten quer zur Leitungsrichtung in unterschiedlichen Schnittpositionen entlang dieser Leitungsrichtung bilden;
- Figuren 7a, b: zeigen gemäß einem zweiten Ausführungsbeispiel in zu den Figuren 4c, 5c und 6c vergleichbarer Schnittansicht die Wirkungsweise eines Auswurfmechanismus und
- Figuren 8a, b: zeigen gemäß dem zweiten Ausführungsbeispiel in unterschiedlichen perspektivischen Darstellungen das Presswerkzeug entsprechend Figur 5 angesetzt an einem Pressfitting entsprechend den Figuren 1-3.

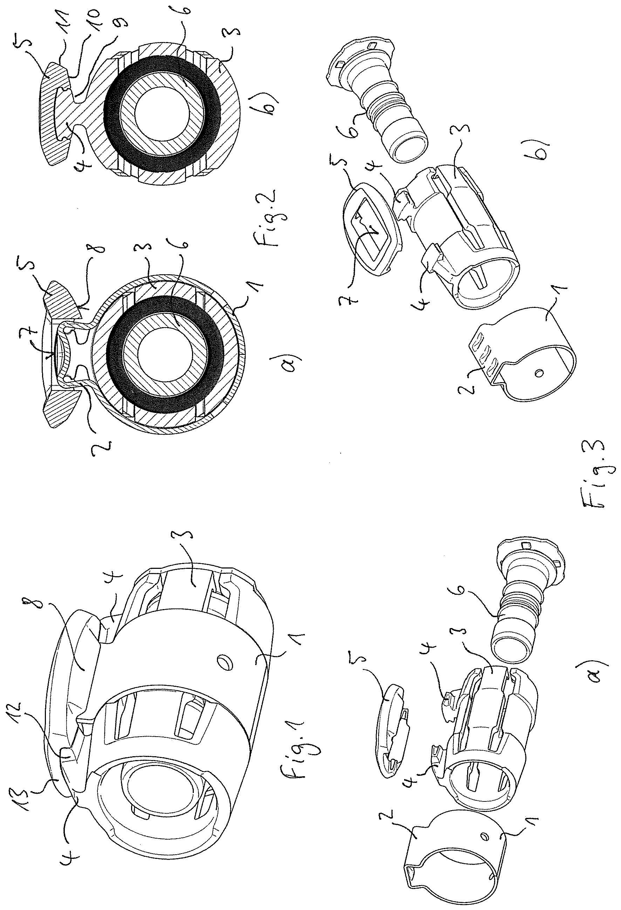

Die Figuren 1-3 zeigen das Ausführungsbeispiel eines erfindungsgemäßen Pressfitting. In den Figuren 3a und b erkennt man eine Metallblech-Spannzange 1 mit einer nach außen abstehenden Presslasche 2, die gemäß Figur 1 und Figur 2a auf einem Hülsenteil 3 mit nach oben und damit außen abstehenden Stegen 4 montiert ist. (Figur 2a zeigt einen Schnitt quer zur Leitungsrichtung durch die Mitte (in Bezug auf die Leitungsrichtung) des Pressfittings und Figur 2b einen Schnitt durch eine in Leitungsrichtung versetzte Ebene, allerdings nur insoweit versetzt, als der Indikator 5 noch mitgeschnitten ist.) Die Stege 4 dienen zum Halten eines Indikators 5. Ferner zeigen die Figuren 1-3 noch ein Stützhülsenteil 6, das bspw. Teil einer Armatur sein kann. Der Pressfitting aus den Teilen 1, 3 und 5 dient dann z. B. zum Montieren einer in den Figuren 1 und 3 nicht gezeigten, aber in den Figuren 2a und b geschwärzt eingezeichneten Rohrleitung auf dem Stützhülsenteil 6. Dieses Stützhülsenteil 6 kann insoweit als Teil des Pressfittings aufgefasst werden, als es die Rohrleitung von innen gegen den Anpressdruck infolge der Verpressung des Pressfittings stabilisiert. Es ist allerdings im vorliegenden Fall konventionell ausgebildet und für die Erfindung nicht von weitergehendem Interesse (und daher nicht zwingender Anspruchsbestandteil).

Üblicherweise wird die Spannzange 1 mit Hilfe des Hülsenteils 3 auf dem Stützhülsenteil 6 montiert, etwa indem der in den Figuren 1 und 3 rechte hintere Teil des Hülsenteils 3 auf einer Schulter des Stützhülsenteils 6 clipsend arretiert wird. In den dadurch entstehenden Ringraum kann das Rohrleitungsende von der anderen Seite, also in Figur 1 von links vorne, bis zum Anschlag eingeschoben werden. Dann entsteht die Situation gemäß den Figuren 2a und b. Durch ein an sich bekanntes Verpressen der beiden ungefähr radial verlaufenden Schenkel der Presslasche 2 in Umfangsrichtung nach innen wird der übrige zylindrische Teil der Spannzange 1 gespannt und in dieser gespannten Lage gehalten, weil die Presslasche plastisch verformt wird. Das ist an sich als sogenannter Oetiker-Pressfitting bekannt. Der dadurch entstehende Anpressdruck wird in diesem Fall durch das Hülsenteil 3 nach innen vermittelt, wobei dieses durch sich in Leitungsrichtung (axial) erstreckende Schlitze nachgeben kann. Auf die übrigen Einzelheiten des ganz ungefähr zylindrischen Teils des Hülsenteils 3 wird hier nicht im Einzelnen eingegangen, sie sind Gegenstand einer anderen Patentanmeldung. Von Interesse für die vorliegende Erfindung sind aber die beiden Stege 4.

Die beiden Stege 4 dienen in noch näher zu erläuternder Weise zur Halterung des Indikators 5. Wie die Figuren 2b und 3a zeigen, haben die axial gesehen äußeren Enden des Indikators 5 eine ungefähr umgekehrte U-Form, die klammerartig einen Querteil eines ungefähr T-förmiges Profils des jeweiligen Steges 4 seitlich übergreift.

Dabei ist der Indikator 5 auf den Querteil des T-Profils der beiden Stege 4 aufgeclipst. Hierzu hat er als Kunststoffspritzgussteil eine gewisse Eigenelastizität, sodass die Schenkel des umgekehrten U-Profils des Indikators 5 etwas auseinandergebogen werden können. Die innen liegenden Seiten dieser Schenkel und die dementsprechenden Außenseiten des Querteils des T-Profils haben ferner, wie vor allem Figur 2b zeigt, jeweilige Rast- oder Clipsvorsprünge und Ausnehmungen in einer sich aus Figur 3a ergebenden, im Wesentlichen in Leitungsrichtung gestreckten Form. Davon unabhängig sind die genannten Flächen des Steges 4 und des Indikators 5 jeweils hinterschnitten, sodass die Clipsverbindung schon ohne die dargestellten Vorsprünge und Ausnehmungen halten würde, wenngleich schwächer.

Die Figuren 1 und 2a veranschaulichen ferner, dass eine ähnliche Clipsverbindung auch im (in Leitungsrichtung, also axial) gesehen mittleren Bereich des Pressfittings möglich wäre, indem der Indikator 5 dort in analoger Weise in die durch die seitlichen Wände der Presslasche 2 gebildeten Hinterschnitte eingreift. Dies ist aber bei diesem Ausführungsbeispiel nicht der Fall; die Clipsverbindung beschränkt sich vielmehr auf die Pressfittingbereiche axial neben der Spannzange 1.

Die zu der Presslasche 2 weisenden Innenseiten der weiter unten noch zu erläuternden Öffnung in dem Indikator 5 sind vielmehr ungefähr parallel zu der erwähnten Richtung des Abclipsens gemäß Figur 2a sogar einen gewissen Abstand von der Presslasche 2 ein. Das erleichtert eine elastische Verformung und das Abclipsen beim Verpressen.

Allerdings zeigt die in Figur 2a nach unten weisende Seite des Indikators 5, also die dem zylindrischen Teil der Spannzange 1 zugewandte Seite, eine besonders ausgeprägt schräge Form 8, wobei sich die Orientierungsangabe "schräg" auf eine radiale Richtung mitten durch die Presslasche 2 der Spannzange 1 bezieht. Das ist die Richtung, in der der Indikator 5 idealisierterweise abgenommen werden soll.

Hierzu greifen noch näher zu erläuternde keilförmige Spitzen von Pressteilen des Werkzeugs beim Verpressvorgang unter diese schrägen Flächen 8 des Indikators 5 und erzeugen durch Keilwirkung eine Kraft nach oben, also in der erwähnten Richtung. Diese Kraft löst die beschriebene Clipsverbindung, also den Formschluss zwischen Indikator 5 und Hülsenteil 3 (konkret den Stegen 4), sodass nach dem Verpressen in der beschriebenen verclipsten Position kein Indikator 5 mehr zu sehen ist. Da dieser in einer Signalfarbe gehalten ist, die sich von den Farben der übrigen Pressfittingteile deutlich unterscheidet, ergibt sich daraus ein wesentlicher Unterschied im Erscheinungsbild.

Beim vorliegenden Beispiel sind die Indikatoren reversibel abclipsbar, können also im Prinzip gesammelt und für neue Pressfittinge wiederverwendet werden.

Die Stabilität des Indikators 5 selbst wird dadurch gefördert, dass er die Presslasche 2 vollständig umläuft, wie vor allem die Figuren 1 und 3b zeigen. Dabei weist er allerdings radial außerhalb der Presslasche 2 eine große Öffnung auf, die in Figur 3b mit 7 bezeichnet ist und durch die hindurch im montierten Zustand (Figur 2a) das in Figur 3b sichtbare Plateau der Presslasche gut erkennbar ist. Die dem Benutzer vertraute technische Natur des Pressfittings als Oetiker-Pressfitting mit der an sich vorbekannten Presslaschenform ist also trotz des relativ groß gehaltenen Indikators 5 unmittelbar erkennbar und deutlich. Ferner kann das für den Indikator 5 verwendete (und in vielen Fällen wohl nicht wiederzuverwendende) Material knapp gehalten werden.

Figur 2b zeigt das Querschnittsprofil des Indikators 5 und des Steges 4 axial neben der Spannzange 1, aber noch im Bereich des T-Profils des Steges 4. Man erkennt gut, dass der Querteil des T-Profils durch den Indikator 5 gewissermaßen verbreitert wird und dabei setzt das Profil des Indikators 5 zunächst eine nach unten, also zum zylindrischen Teil der Spannhülse 1 weisenden schrägen Flächenabschnitt 9 unter dem Querteil des T-Profils des Steges 4 fort, und zwar mit einem ebenso schrägen Flächenabschnitt 10, an den sich dann ein deutlich steilerer, aber immer noch im gleichen Sinn schräger Flächenabschnitt 11 anschließt.

Figur 1 verdeutlicht, dass sich der Flächenabschnitt 11 auch über den Teil des Indikators 5 über der Spannzange 1 hinweg fortsetzt und dabei mit nur kleinem Knickwinkel in den bereits beschriebenen schrägen Flächenabschnitt 8 übergeht (Figur 2a), wohingegen der Flächenabschnitt 10 von dem Flächenabschnitt 8 deutlich abgegrenzt ist, vgl. Figur 1.

Schließlich gibt es an den Außenseiten in axialer Richtung der Querteile der Stege 4 schräge Flächen 12, an die ebenfalls eine Außenfläche 13 des Indikators weitgehend bündig anschließt und die in doppeltem Sinn schräg sind: Einerseits sind sie leicht nach unten gekippt, also auf den Hülsenteil 3 bzw. dessen zylindrischen Hauptabschnitt zu, andererseits in Umfangsrichtung nach außen etwas zurückspringend. Die axiale Erstreckung der Querteile der Stege 4 ist also weiter innen, an der Basis des T-Profils, etwas größer als weiter außen.

Die Funktion der verschiedenen schrägen Flächenabschnitte 9-12 ergibt sich aus der folgenden Beschreibung der Wechselwirkung mit dem Presswerkzeug:

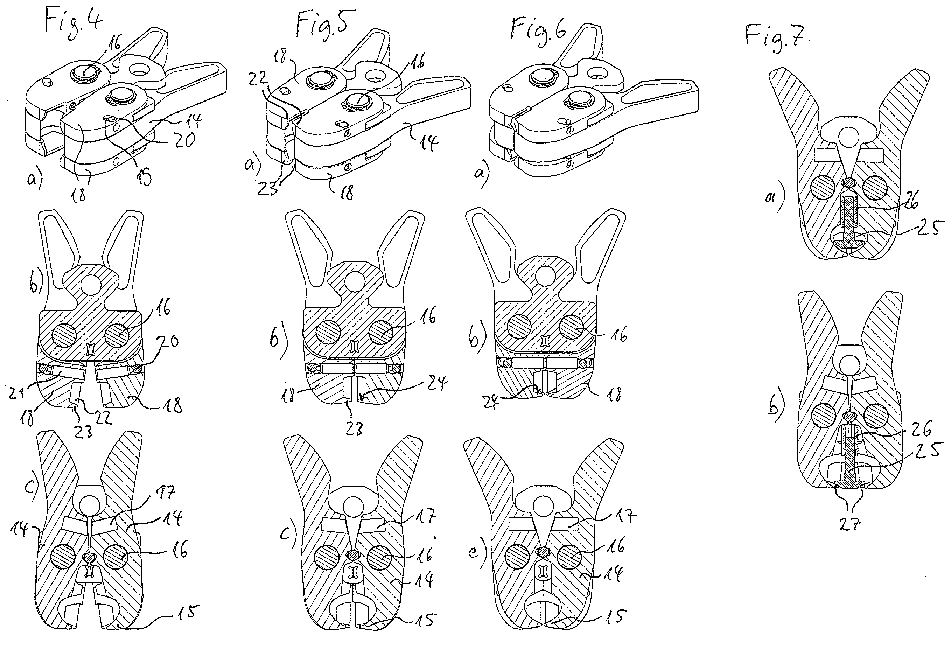

Die Figuren 4-7 zeigen ein speziell für den beschriebenen Pressfitting ausgelegtes Presswerkzeug, das grundsätzlich zangenartig aufgebaut ist. In den Figuren 4-6 ist dieses Presswerkzeug in drei verschiedenen Positionen, nämlich zunächst geöffnet zum "Überstülpen" über den Indikator 5 und vor allem die Presslasche 2, dann teilgeschlossen und dann in die endgültige Pressstellung geschlossen dargestellt. Dabei zeigen die Teildarstellung a-c jeweils eine perspektivische Ansicht, einen außermittigen Schnitt quer zu den noch zu erläuternden Drehachsen und dann einen mittigen Schnitt ebenfalls quer zu den Drehachsen. Man erkennt dabei zunächst, dass das Werkzeug im Wesentlichen in drei Ebenen aufgebaut ist, wobei die mittlere Ebene in den Teildarstellungen c und eine der beiden spiegelsymmetrischen äußeren Ebenen in den Teildarstellungen b zu sehen ist.

Die an sich vorbekannte Verpressfunktion wird durch die mittlere Ebene wahrgenommen. Die Figuren 4c, 5c und 6c zeigen hierbei zwei presszangenartige Arme 14 mit einem jeweiligen keilartigen Kopf, nämlich einem Pressteil 15 des Werkzeugs. Die Presszangenarme 14 sind um zwei quer beabstandete Drehachsen 16 verschwenkbar und werden durch eine in den dargestellten Sacklöchern 17 gelagerte Kompressionsschraubenfeder (nicht gezeigt) in Schließrichtung beaufschlagt. Zusätzlich ist ein nicht gezeigter motorischer Antrieb vorgesehen, der im Wesentlichen einen Keil zwischen die in den Figuren nach oben weisenden Schenkel der Presszangenarme 14 drückt und damit die für das Verpressen selbst erforderliche Kraft bereitstellt.

Beim Verpressen greifen die keilartigen Spitzen 15, also die Pressteile, unter die schrägen Flächen 8 des Indikators und damit an die Fußbereiche der Schenkel der Presslasche 2. In der Position gemäß Figur 5c wird dabei noch keine oder keine nennenswerte Kraft auf den Indikator 5 ausgeübt und noch keine Verpressung durchgeführt. In einer weitergehenden Schließbewegung von Figur 5c nach Figur 6c wird die eigentliche Verpressung der Presslasche 2 durch Zusammenschieben der erwähnten Fußbereiche und dabei plastisches Verformen durchgeführt (die konventionell ist und deswegen nicht näher erläutert werden muss). Gleichzeitig werden durch die Wechselwirkung zwischen den Pressteilen 15 und den Schrägflächen 8 Kräfte auf den Indikator 5 ausgeübt, die diesen abclipsen. Er ist dann zunächst in dem in Figur 6c über den Pressteilen 15 erkennbaren Hohlraum gefangen und wird, wie weiter unten noch anhand Figur 7 erläutert, danach nach unten ausgestoßen.

Die Figuren 4b, 5b und 6b zeigen zwei weitere von insgesamt vier Werkzeugteilen, nämlich Führungsteile 18, die grundsätzlich ähnlich wie die Pressteile 15 bewegt werden. Dazu sind sie auf denselben Bolzen und damit an denselben Drehachsen 16 gelagert. Ferner weisen sie jeweils in den Figuren 4a-6a sichtbare Längsschlitze 19 auf, in denen an den Presszangenarmen 14 befestigte Stifte 20 über eine bestimmte Strecke beweglich sind. In den Figuren 4b-6b erkennt man ferner kleine Federelemente in einem Zylindergehäuse, die mit 21 bezeichnet sind und in einem Gewinde in der jeweiligen Bohrung gehalten sind. Über dieses Gewinde können sie verstellt werden. Sie beaufschlagen mit ihren außenseitigen gefederten Kolbenstangen die erwähnten Stifte 20. Damit nehmen also die Presszangenarme 14 die Führungsteile 18 in allen Bewegungsphasen zwischen den Positionen gemäß den Figuren 4 und 5 mit und sind die Führungsteile dabei in ihrer relativ zu den Presszangenarmen 14 innersten Position, vgl. die Figuren 4a und 5a. Wenn die Führungsteile in noch näher beschriebener Weise in der Position gemäß Figur 5 am Pressfitting anstoßen, können die Pressteile 15 darüber hinaus weiter in die Pressstellung bewegt werden, und zwar abgesehen von den durch die Wechselwirkung zwischen den Pressteilen 15 und dem Pressfitting entstehenden Kräften gegen die Kräfte der Federelemente 21. Bei den umgekehrten Bewegungen bleiben die Führungsteile zunächst bei einer Bewegung von Figur 6 nach Figur 5 in ihrer geschlossensten Stellung und bewegen sich erst ab der Position gemäß Figur 5 dann weiter mit den Pressteilen nach außen.

Wie durch die Benennung schon vorgegeben, haben die Führungsteile 18 die Aufgabe, das Werkzeug relativ zu dem Pressfitting und der Leitung (sowie weiteren mit dem Pressfitting verbundenen Vorrichtungen) zu positionieren und dem Benutzer eine korrekte Positionierung durch eine Führung, das heißt auch "haptische" Rückmeldung, bei der manuellen Handhabung die Positionierung zu erleichtern. Dazu weisen die Führungsteile jeweils in axialer Richtung außen liegende Seitenwände auf, die in den Figuren 4a-6a nach oben und nach unten weisen und mit 22 bezeichnet sind. Diese Seitenwände 22 lassen in der Position der Figuren 5 und 6 einen Spalt zwischen sich, der für den mittleren Teil des jeweiligen Steges 4 axial außerhalb des Querteils und des T-Profils ausreicht. Die Innenseiten dieser Seitenwände 22 sind dabei etwas schräg gestellt und passen insoweit zu der Schrägstellung der axialen Seitenkanten der Stege 4. Der Begriff "schräg" bezieht sich hierbei auf die Schließbewegung, die ja im Wesentlichen in einer Richtung senkrecht zur Leitungsrichtung und außerdem senkrecht zu der erwähnten Richtung vom Mittelpunkt der Leitung (und des Pressfittings) durch die Mitte der Presslasche 2 nach außen verläuft. Die Seitenwände 22 gleiten bei der Bewegung von Figur 4 nach Figur 5 an den axial äußeren Kanten der Stege 4 entlang, weswegen diese in der erläuterten Weise etwas schräg gestellt sind. Dies führt im Wesentlichen zu einer Positionierung entlang der axialen Richtung und auch hinsichtlich Drehbewegungen um eine Drehachse, die vom Leitungsmittelpunkt mittig durch die Presslasche 2 nach außen führt.

Außerdem gibt es auf den zylindrischen Teil der Spannzange 1 und auch des Hülsenteils 3 zu gerichtete Außenwände der Führungsteile, die mit 23 bezeichnet sind und in den Figuren 4b-6b die untere Seite der gezeichneten abschließenden Spitzen der Führungsteile bilden. Diese Außenwände 23 haben an ihrer Innenseite (in Bezug auf das Werkzeug), also in den Teildarstellungen b und c nach oben, ebenfalls eine schräge Fläche. Diese ist mit 24 bezeichnet und kommt in Wechselwirkung mit der schrägen Fläche 9 des jeweiligen Steges 4. Hierdurch erfolgt eine Führung im Hinblick auf die richtige Nähe zur Leitung (Bewegung entlang der Richtung vom Mittelpunkt des Pressfittings durch die Presslasche 2 nach außen und umgekehrt) und hinsichtlich Drehungen um eine Drehachse, die senkrecht zu dieser gerade erwähnten Abstandsrichtung und zur Leitungsrichtung liegt. Ferner erfolgt dadurch eine Führung um Drehungen um die Leitungsrichtung als Achse. Auch die verbleibende Verschieberichtung, nämlich in der Schließrichtung der Werkzeugteile, erfolgt durch diese Wechselwirkung zwischen den schrägen Flächen 24 und 9, aber auch durch die zuvor beschriebene zwischen der schrägen Fläche 12 und der an der Seitenwand 22.

Die beschriebenen Führungsvorgänge finden statt bei einer Annäherung aus der Position gemäß Figur 4 in die gemäß Figur 5 und ist dann idealerweise abgeschlossen. In der Position gemäß Figur 5 sitzen also die Führungsteile 18 praktisch spielfrei auf dem Pressfitting auf, obwohl der Pressvorgang noch gar nicht stattgefunden hat. Damit ist sichergestellt, dass der eigentliche Pressvorgang von Figur 5 in Figur 6 in korrekter Lage vonstattengeht. Auch erst dann wird der Indikator 5 abgeclipst; er bleibt also am Platz, wenn das Werkzeug aufgrund grober Fehlpositionierung gar nicht in die Position gemäß Figur 5 gelangt und neu angesetzt werden muss.

Die bereits erwähnte Feder in den Sacklöchern 17 spannt in der beschriebenen geschlossenen Position der Führungsteile 18 vor dem Pressvorgang die Führungsteile 18 gegen den Pressfitting. Der in den Figuren 5b und 6b gezeichnete Anschlag von achsnäheren Teilen der Führungsteile 18 (in den Figuren weiter oben als die Federzylinder 21) ist dabei noch nicht ganz erreicht, sondern findet streng genommen nur statt, wenn das Werkzeug ohne Pressfitting geschlossen wird.

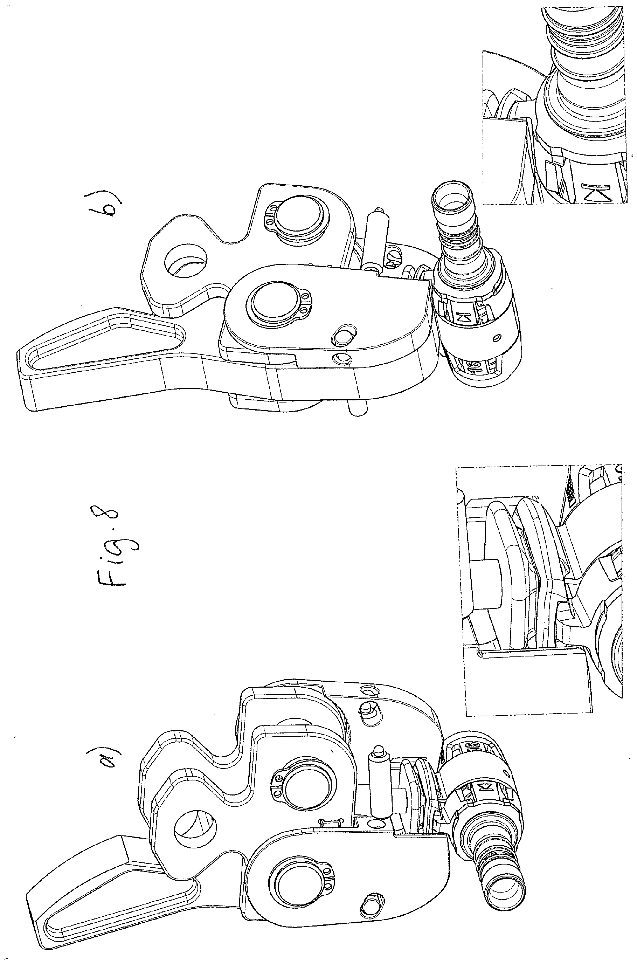

Figur 7 zeigt einen Auswerfermechanismus für den Indikator 5 bei einem zweiten Ausführungsbeispiel, für das im Übrigen alle vorstehenden Erläuterungen gelten. Dabei ist ein Stempel 25 teleskopisch in einer Hülse 26 gelagert und durch eine (nicht gezeichnete) Feder im Sinn von Figur 7 nach unten beaufschlagt. Der Stempel 25 hat ferner eine in Figur 7 nach unten weisende Stirnfläche mit einer rahmenartig umlaufenden und dabei etwas zurückspringenden Außenkante 27, vgl. hierzu auch Figur 8a. Innerhalb dieser Außenkante 27 ist die Stirnfläche des Stempels 25 plan. Mit dem planen Teil der Stirnfläche kann der Stempel in die Öffnung 7 des Indikators 5 eingreifen und die Kante 27 ist dementsprechend an die Form des Indikators 5 in der Umgebung dieser Öffnung 7 formangepasst.

Wenn in der Position gemäß Figur 4 das Werkzeug auf den Indikator 5 und die Stege 4 aufgesetzt wird, drücken also die Presslasche 2 und der Indikator 5 den Stempel 25 gegen die Federkraft in die Hülse 26 zurück. Dies ist in Figur 8a perspektivisch und (der Sichtbarkeit halber) unter Weglassung der Pressteile und eines Teils der Führungsteile dargestellt. Nach dem bereits beschriebenen Abclipsen ist der Indikator 5 dann in einem Raum zwischen den Pressteilen und Führungsteilen gefangen, vgl. Figur 6b und c und bzgl. der folgenden Öffnung Figur 5b und c. Wenn dann das Werkzeug ausreichend weit geöffnet wird, vgl. Figur 7b, drückt der Stempel 25 infolge der Federkraft den Indikator 5 zwischen den Pressteilen und am Rand der Führungsteile der Werkzeughälften nach unten heraus. Bis zu diesem Zeitpunkt ist der Indikator 5 dabei durch den Formschluss (hinsichtlich Bewegungen quer zur Auswurfrichtung) zwischen der Stirnfläche des Stempels 25 und der Oberseite (gemäß den Figuren 1 und 2) des Indikators 5 sicher gehalten und kann nicht infolge einer Fehlpositionierung zu Funktionsstörungen führen.

Figur 8a dient ferner zur Veranschaulichung der Erläuterungen, die zu den Figuren 4-6 gegeben wurden, insbesondere im Hinblick auf die Wechselwirkung mit der Formgebung des Pressfittings. Figur 8b vervollständigt diese Veranschaulichung, indem zusätzlich ein Pressteil dargestellt ist und die Perspektive etwas verändert ist. Weitere Erläuterungen erübrigen sich und es kann auf das Obenstehende verwiesen werden.

## Patentansprüche

1. Pressfitting für eine Schlauch- oder Rohrleitung mit
einer Spannzange (1, 2), die einen zylindrischen Teil (1) und eine davon nach außen abstehende Presslasche (2) aufweist,
und einem Fittingteil (5) als Indikator (5) für die Verpressung der Presslasche (2), der zu diesem Zweck an dem Pressfitting in einer Montageposition angebracht, in der Montageposition an der Presslasche (2) angeordnet und aus der Montageposition durch ein Presswerkzeug beim Verpressen abnehmbar ist,
**dadurch gekennzeichnet, dass** der Indikator (5) aus der Montageposition durch elastisches Lösen eines Formschlusses durch ein Presswerkzeug beim Verpressen als separates Bauteil vom Pressfitting abnehmbar ist.

2. Pressfitting nach Anspruch 1, der zusätzlich zu dem Indikator (5) und der Spannzange (1, 2) ein Hülsenteil (3) aufweist zum Halten der Schlauch- oder Rohrleitung und der Spannzange (1, 2) auf der Schlauch- oder Rohrleitung, welches Hülsenteil sich zumindest teilweise in axialer Richtung über die Spannzange (1, 2) hinaus erstreckt und zumindest einen nach außen abstehenden Steg (4) aufweist, der sich axial an die Presslasche (2) anschließt, vorzugsweise auf zwei entgegengesetzten Seiten der Presslasche (2) je einen sich axial daran anschließenden Steg (4).

3. Pressfitting nach Anspruch 2, bei dem der Steg (4) in axialer Richtung gesehen ein T-Profil und infolgedessen in Umfangsrichtung beidseits einen Hinterschnitt aufweist.

4. Pressfitting nach Anspruch 3, bei dem der Indikator (5) den Steg (4) zumindest im Bereich seines T-Profils übergreift und dabei den Querteil des T-Profils in Umfangsrichtung fortführt, und zwar bezüglich der axialen Richtung zumindest teilweise, vorzugsweise vollständig.

5. Pressfitting nach einem der Ansprüche 2-4, bei dem der Steg (4), vorzugsweise ein Querteil des T-Profils des Steges (4), an der axial von der Presslasche (2) wegweisenden Seite (12) beidseits in Umfangsrichtung nach außen axial schräg zurückspringt.

6. Pressfitting nach einem der vorstehenden Ansprüche mit einer Rastvorsprung-Ausnehmung-Kombination an zumindest einer in Umfangsrichtung nach innen weisenden Fläche des Indikators (5) einerseits und andererseits zumindest einer komplementären, in Umfangsrichtung nach außen weisenden Fläche des übrigen Pressfittings, insbesondere des Steges (4) nach Anspruch 2.

7. Pressfitting nach einem der vorstehenden Ansprüche, bei dem der Indikator (5) gegenüber dem zylindrischen Teil (1) der Spannzange (1, 2) nach außen absteht und dabei an zumindest einer seiner Außenseiten, vorzugsweise an zwei entgegengesetzten Außenseiten, einen Hinterschnitt (8) bildet, um durch Eingriff eines Presswerkzeugteils (15) in diesen zumindest einen Hinterschnitt (8) abgetrennt werden zu können.

8. Pressfitting nach Anspruch 7, bei dem der Indikator (5) um die Presslasche (2) geschlossen umläuft.

9. Pressfitting nach Anspruch 7 oder 8, bei dem der Indikator (5) radial außerhalb der Presslasche (2) eine Öffnung (7) aufweist, durch die hindurch die Presslasche (2), insbesondere ggf. ihr Plateau, sichtbar ist, wobei die Öffnung (7) vorzugsweise den gesamten Bereich radial außerhalb der Presslasche (2) erfasst.

10. Pressfitting nach Anspruch 2, optional in Verbindung mit einem weiteren der Ansprüche 3-9, bei dem der Indikator (5) gegenüber der Spannzange (1, 2) und dem Hülsenteil (3) verschiedenfarbig ist.

11. Verwendung eines Pressfittings nach einem der vorstehenden Ansprüche zur Verpressung mit einem Presswerkzeug, bei welcher Verwendung zwei mit einer Bewegung aufeinander zu schließbare und mit einer Bewegung voneinander weg öffenbare Werkzeughälften (14, 15, 18) bei einer zur Verpressung führenden Schließbewegung die Presslasche (2) verpressen und den Indikator (5) durch elastisches Lösen des Formschlusses von dem Pressfitting abtrennen.

12. Verwendung nach Anspruch 11 eines Pressfittings nach Anspruch 3, bei welcher Verwendung zumindest eine keilförmige Spitze (15) zumindest einer Werkzeughälfte (14, 15, 18) eingreift in den in Anspruch 7 genannten Hinterschnitt (8) und der Indikator (5) dadurch abgetrennt wird.

13. Verwendung nach Anspruch 11 oder 12 eines Pressfittings nach Anspruch 3 oder 5, bei welcher Verwendung das Presswerkzeug durch den Steg (4) des Pressfittings im Sinn einer Positionierung in eine Verpressposition geführt wird, und zwar insbesondere durch Eingriff in die Hinterschnitte nach Anspruch 3 und/oder durch eine Bewegung entlang den schräg zurückspringenden Seiten (12) nach Anspruch 5.

14. Verwendung eines Indikators (5) für einen Pressfitting nach einem der Ansprüche 1-10, wobei der Indikator (5) als Fittingteil eine Indikationsfunktion für die Verpressung der Presslasche (2) ausübt und zu diesem Zweck an dem Pressfitting in einer Montageposition an der Presslasche (2) angeordnet wird, und zwar indem der Indikator (5) mit elastisch verformbaren Teilen des Indikators (5) einen Formschluss an dem Pressfitting herstellt, und aus der Montageposition durch ein Presswerkzeug beim Verpressen als separates Bauteil vom Pressfitting abnehmbar ist, und zwar durch elastisches Lösen des Formschlusses durch ein Presswerkzeug beim Verpressen.

## Claims

1. A press fitting for a hose or tube conduit, having
a clamp chuck (1, 2) with a cylindrical part (1) and, protruding therefrom, a press lug (2),
and a fitting part (5) as an indicator (5) for the pressing of the press lug (2), which indicator (5) is mounted hereto on the press fitting in a mounting position, is arranged in the mounting position on the press lug (2), and is demountable from the mounting position as a component separate from the press fitting by a press tool during the pressing,
**characterized in that** the indicator (5) is demountable from the mounting position by means of an elastic release of a form fit by a press tool during the pressing.

2. The press fitting of claim 1, having, additionally to the indicator (5) and the clamp chuck (1, 2), a sleeve part (3) for holding the hose or tube conduit and the clamp chuck (1, 2) on the hose or tube conduit, the sleeve part axially extending at least in part beyond the clamp chuck (1, 2) and comprising a projection (4) projecting outwardly and being adjacent to the press lug (2) axially, preferably a respective axially adjacent projection (4) on two opposed sides of the press lug (2).

3. The press fitting of claim 2 wherein the projection (4) has, as seen in an axial direction, a T-profile and therefore has an undercut on both sides in a circumferential sense.

4. The press fitting of claim 3 wherein the indicator (5) extends over the projection (4) at least in a portion of its T-profile and thereby continues a transverse part of the T-profile circumferentially, namely at least partially with regard to the axial direction, and preferably completely.

5. The press fitting of one of claims 2 to 4, wherein the projection (4), preferably a transverse part of the T-profile of the projection (4), has an axially outwardly oblique back recess on both sides in a circumferential sense at a side (12) axially facing away from the press lug (2).

6. The press fitting of one of the preceding claims having a latch projection-recess combination on at least one surface of the indicator (5) facing inwardly in a circumferential sense on the one hand and, on the other hand, on at least one complementary surface of the remaining press fitting facing outwardly in a circumferential sense, in particular of the projection (4) according to claim 2.

7. The press fitting of one of the preceding claims wherein the indicator (5) projects outwardly relative to the cylindrical part (1) of the clamp chuck (1, 2) and thereby produces an undercut (8) on at least one of its outer faces, preferably on two opposed outer faces, in order to be detachable by an insertion of a press tool part (15) into this at least one undercut (8).

8. The press fitting of claim 7 wherein the indicator (5) extends around the press lug (2) in a closed manner.

9. The press fitting of claim 7 or 8 wherein the indicator (5) has an opening (7) radially outward of the press lug (2), through which opening (7) the press lug (2), in particular a plateau thereof, if any, is visible, wherein the opening (7) preferably extends over the complete area radially outward of the press lug (2).

10. The press fitting of claim 2, optionally in combination with a further one of claims 3 to 9, wherein the indicator (5) has a different colour than the clamp chuck (1, 2) and the sleeve part (3).

11. A use of the press fitting of one of the preceding claims for being pressed by a press tool, in which use two tool halves (14, 15, 18) being closable by a movement towards each other and being openable by a movement away from each other, press the press lug (2) and detach the indicator (5) by an elastic release of the form fit from the press fitting during a closing movement resulting in a pressing.

12. The use of claim 11 of a press fitting of claim 3, in which use at least one wedge-shaped tip (15) of at least one tool half (14, 15, 18) is inserted into the undercut (8) mentioned in claim 7 and the indicator (5) is detached thereby.

13. The use of claim 11 or 12 of a press fitting according to claim 3 or 5, in which use the press tool is guided by the projection (4) of the press fitting in terms of a positioning into a pressing position, and in particular by means of an insertion into the undercuts according to claim 3 and/or by a movement along the obliquely recessed faces (12) according to claim 5.

14. A use of an indicator (5) for a press fitting according to one of claims 1 to 10, wherein the indicator (5) is operative as an indication for the pressing of the press lug (2) and is hereto arranged on the press fitting in a mounting position on the press lug (2), namely in that the indicator (5) makes up a form fit on the press fitting with elastically deformable parts of the indicator (5) and can be demounted from the mounting position as a separate component from the press fitting by a press tool during pressing, namely by an elastic release of the form fit by a press tool during pressing.

## Revendications

1. Raccord à sertir destiné à un tuyau ou à un tube, comportant:
une douille de serrage (1, 2) présentant une partie cylindrique (1) et une languette à sertir (2) décalée de cette dernière vers l'extérieur, et
une partie de raccord (5) qui sert d'indicateur (5) quant au serrage de la languette à sertir (2) et qui, à cet effet, est placée sur le raccord à sertir dans une position de montage, est disposée sur la languette à sertir (2) dans la position de montage et peut être extraite de la position de montage lors du serrage grâce à un outil de sertissage,
**caractérisé en ce que** l'indicateur (5) peut être extrait de la position de montage lors du serrage et former un composant séparé du raccord à sertir en perdant, de manière élastique, sa complémentarité de forme grâce à l'utilisation d'un outil de sertissage.

2. Raccord à sertir selon la revendication 1, comprenant, en sus de l'indicateur (5) et de la douille de serrage (1, 2), une partie formant manchon (3) destinée à retenir le tuyau ou tube ainsi que la douille de serrage (1, 2) sur ledit tuyau ou tube, ladite partie formant manchon s'étendant au moins en partie dans le sens axial au-delà de la douille de serrage (1, 2) et présentant au moins un renflement (4) décalé vers l'extérieur et disposé dans le prolongement axial de la languette à sertir (2), de préférence un renflement (4) respectif disposé sur deux côtés opposés de la languette à sertir (2) dans le prolongement axial de celle-ci.

3. Raccord à sertir selon la revendication 2, dans lequel le renflement (4) présente un profil en T, vu dans le sens axial, et présente en conséquence des deux côtés, dans le sens périphérique, une contre-dépouille.

4. Raccord à sertir selon la revendication 3, dans lequel l'indicateur (5) chevauche le renflement (4) au moins dans la section de son profil en T et coiffe ainsi la partie transversale du profil en T dans le sens périphérique, et ce au moins partiellement, et de préférence totalement, eu égard au sens axial.

5. Raccord à sertir selon l'une des revendications 2 à 4, dans lequel le renflement (4), et de préférence une partie transversale du profil en T du renflement (4), ressort des deux côtés, de manière inclinée axialement vers l'extérieur sur le côté (12) axialement dirigé à l'opposé de la languette à sertir (2).

6. Raccord à sertir selon l'une des revendications précédentes, comportant d'une part une combinaison de ressaut d'encliquetage et évidement sur au moins une surface périphérique intérieure de l'indicateur (5), et d'autre part au moins une surface périphérique extérieure complémentaire présente sur le restant du raccord à sertir, notamment sur le renflement (4) selon la revendication 2.

7. Raccord à sertir selon l'une des revendications précédentes, dans lequel l'indicateur (5) est décalé vers l'extérieur par rapport à la partie cylindrique (1) de la douille de serrage (1, 2) et forme ainsi une contre-dépouille (8) sur au moins un de ses côtés extérieurs et de préférence sur deux côtés extérieurs opposés, pour pouvoir être détaché sous l'effet de l'introduction d'une partie d'outil de sertissage (15) dans cette au moins une contre-dépouille (8).

8. Raccord à sertir selon la revendication 7, dans lequel l'indicateur (5) encercle la languette à sertir (2) de façon fermée.

9. Raccord à sertir selon la revendication 7 ou 8, dans lequel l'indicateur (5) présente, radialement à l'extérieur de la languette à sertir (2), une ouverture (7) à travers laquelle est visible la languette à sertir (2), et notamment éventuellement son plateau, ladite ouverture (7) enceignant de préférence la totalité de la section radialement extérieure de la languette à sertir (2).

10. Raccord à sertir selon la revendication 2, facultativement en association avec une autre revendication parmi les revendications 3 à 9, dans lequel l'indicateur (5) est de couleur différente de celle de la douille de serrage (1, 2) et de la partie formant manchon (3).

11. Utilisation d'un raccord à sertir selon l'une des revendications précédentes, destiné à être serré par un outil de sertissage, dans laquelle deux moitiés d'outil (14, 15, 18), refermables selon un mouvement dirigé l'une vers l'autre et ouvrables selon un mouvement dirigé en s'éloignant l'une de l'autre, serrent la languette à sertir (2) au cours d'un mouvement de fermeture visant à effectuer un serrage et détachent l'indicateur (5) du raccord à sertir sous l'effet d'une perte élastique de sa complémentarité de forme.

12. Utilisation selon la revendication 11 d'un raccord à sertir selon la revendication 3, dans laquelle au moins une pointe (15) en forme de coin d'au moins une moitié d'outil (14, 15, 18) est introduite dans la contre-dépouille (8) citée dans la revendication 7 et l'indicateur (5) s'en trouve détaché.

13. Utilisation selon la revendication 11 ou 12 d'un raccord à sertir selon la revendication 3 ou 5, dans laquelle l'outil de sertissage est guidé par le renflement (4) du raccord à sertir pour permettre son positionnement dans une position de serrage, en particulier en étant introduit dans les contre-dépouilles selon la revendication 3 et/ou en longeant les côtés (12) ressortant de façon inclinée selon la revendication 5.

14. Utilisation d'un indicateur (5) destiné à un raccord à sertir selon l'une des revendications 1 à 10, dans laquelle l'indicateur (5), sous la forme d'une partie de raccord, exerce une fonction d'indication quant au serrage de la languette à sertir (2) et est disposé à cet effet sur le raccord à sertir dans une position de montage sur la languette à sertir (2), l'indicateur (5) produisant une complémentarité de forme sur le raccord à sertir du fait de parties élastiquement déformables de l'indicateur (5), et peut être extrait de la position de montage lors du serrage grâce à un outil de sertissage pour former un composant séparé du raccord à sertir, et ce sous l'effet d'une perte élastique de sa complémentarité de forme lors du serrage grâce à un outil de sertissage.
